# EUROPÄISCHE PATENTANMELDUNG

(11) **EP 1 381 208 A1**
(43) Veröffentlichungstag der Anmeldung: **14.01.2004**
(21) Anmeldenummer: 03004612.2
(22) Anmeldetag: 01.03.2003
(51) Int. Cl.: H04M 1/06, H04M 1/04, H04M 1/12, F16M 11/10, F16M 13/02

(54) **Vorrichtung zum Aufstellen und Halten eines Kommunikationsgerätes in aufrechter Position**

(30) Priorität: 11.07.2002 DE 20210705 U
(71) Anmelder: Plückthun, Wolfgang, 26209 Sandkrug (DE); Böttner, Wilfried, 26209 Sandkrug (DE); Behring, Günther, 26127 Oldenburg (DE)
(72) Erfinder: Plückthun, Wolfgang, 26209 Sandkrug (DE); Böttner, Wilfried, 26209 Sandkrug (DE); Emde, Carsten, 26209 Sandkrug (DE)
(74) Vertreter: Siekmann, Gunnar, Dipl.-Phys.

(57) **Zusammenfassung**

Eine Vorrichtung zum Halten eines Gerätes für die Funkkommunikation, insbesondere eines Mobiltelefons, in einer etwa aufrecht, bzw. hochkant stehenden Position, besteht aus einer Grundplatte (2) mit Haltemitteln (5) zum Ansetzen und Halten eines Mobiltelefons mit seiner ein Display und Tastenfeld aufweisenden Bedienseite gegenüberliegenden Rückseite an der Grundplatte und (2) wenigstens einem mit der Grundplatte klappbeweglich verbundenen und somit davon abspreizbaren Stützmittel (3).

## Beschreibung

Die Erfindung bezieht sich auf eine Vorrichtung zum Halten eines funktechnischen Kommunikationsgerätes, insbesondere eines Mobiltelefons, in einer etwa aufrecht bzw. hochkant stehenden Position.

Kommunikationsgeräte, insbesondere ein als sogenanntes "Handy" bekanntes Mobiltelefon, weisen an einer Bedienseite ein Tastenfeld sowie ein Display auf. Das Display ist ein Anzeigenfeld für Grafiken und Symbole, Buchstaben und Zahlen, Schriften und Bilder. Es erfüllt damit eine bildschirmähnliche Funktion und hat sichtseitig eine glatte Glasfläche, wie sie auch von üblichen Bildschirmen bekannt ist.

Ein Mobiltelefon wird oftmals liegend, z. B. auf einem Tisch, einer Sitzfläche oder einer sonstigen Ablage bereit gehalten. Dabei treten häufig Lichtspiegelungen an der glatten Oberfläche des Displays auf, die das Ablesen des Displays zumindest erschweren, wenn nicht sogar verhindern, was insbesondere dann nachteilig ist, wenn es gilt, gerade empfangene schriftliche Nachrichten zu lesen.

Der Erfindung liegt die Aufgabe zugrunde, eine Vorrichtung zu schaffen, die geeignet ist, Mobiltelefone in aufrecht stehender Position zu halten und somit eventuell störende Lichtspiegelungen im Display zu vermeiden.

Diese Aufgabe ist erfindungsgemäß durch die Merkmale des Schutzanspruchs 1 gelöst.

Vorteilhafte Weiterbildungen der Erfindung und Ausgestaltungen der Vorrichtung ergeben sich aus den Merkmalen der Unteransprüche 2 bis 14.

Die erfindungsgemäße Vorrichtung zum Halten eines Mobiltelefons zeichnet sich aus durch eine Grundplatte mit Haltemitteln zum Ansetzen und Halten des Mobiltelefons mit seiner Rückseite, die seiner ein Display und Tastenfeld aufweisenden Bedienseite gegenüberliegt, an der Grundplatte und durch wenigstens ein mit der Grundplatte klappbeweglich verbundenes und somit davon abspreizbares Stützmittel.

Grundplatte und Stützmittel bilden somit ein etwa klappbockartig ausgestaltetes Gestell, das einseitig mit der Rückseite des Mobiltelefons verbindbar ist.

Mit diesem klappbockartigen Gestell aus Grundplatte und davon abspreizbarem Stützmittel ist das Gerät für die Funkkommunikation, insbesondere ein Mobiltelefon, in einer aufrecht, bzw. hochkant stehenden Position abzulegen. In einer derartigen stehenden Position sind Lichtspiegelungen an der glatten Oberfläche des Displays des Mobiltelefons auf ein Minimum reduziert, so daß das Display mit Vorteil einwandfrei ablesbar ist.

Als Haltemittel zur Verbindung der Rückseite des Mobiltelefons mit der Grundplatte kann eine Klebeschicht vorgesehen sein, beispielsweise ein an der Grundplatte angebrachtes doppelseitiges Klebeband. Die Klebelage ist durch ein Abziehpapier geschützt, welches entfernt wird, wenn es gilt, die Grundplatte mit der Rückseite eines Mobiltelefons zu verbinden, indem ein einfaches Andrücken erfolgt.

Die Vorrichtung ist mit besonderem Vorteil geeignet, bereits im Einsatz befindliche Mobiltelefone nachzurüsten.

Selbstverständlich ist es auch möglich, Mobiltelefone von vorne herein mit einer erfindungsgemäßen Vorrichtung auszurüsten, beispielsweise die Grundplatte in das Gehäuse eines Mobiltelefons zu integrieren.

Stützmittel und Grundplatte können die Schenkel eines Scharniers bilden, die mittels eines gemeinsamen Scharnierbolzens miteinander klappgelenkig verbunden sind. Mit besonderem Vorteil sind Begrenzungsmittel für den Klappweg vorgesehen, beispielsweise derart, daß das Stützmittel nur bis zu einem Spreizwinkel von maximal etwa 90° abklappbar ist. Dadurch wird eine ausreichende Standsicherheit erreicht.

Begrenzungsmittel für den Klappweg können z. B. an den Schenkeln eines Scharniers im Bereich des gemeinsamen Scharnierbolzens befindliche Anschläge sein, die z. B. von vorne herein an die Schenkel eines Scharniers angeformt sein können.

Mit besonderem Vorteil besteht der das Stützmittel bildende Schenkel eines Scharniers aus gegeneinander längsverschiebbaren Schenkelabschnitten. Die Schenkelabschnitte sind z. B. teleskopartig aneinander bzw. ineinander geführt. Die Möglichkeit, die Länge des Stützmittels dadurch verändern zu können, daß eine Längsverschiebung eines beweglichen Abschnitts des Stützmittels relativ zu einem festen Abschnitt des Stützmittels erfolgen kann, hat den Vorteil, daß bei einem durch die Begrenzungsmittel festen und damit standsicheren Spreizwinkel des abgespreizten Stützmittels dennoch der Standwinkel des aufrecht zu haltenden Mobiltelefons veränderbar ist. Insbesondere ist eine Anpassung an die verschiedenen Dimensionierungen und Bauformen des jeweils vorhandenen Mobiltelefons möglich, wenn eine Vorrichtung verwendet wird, mit der ein vorhandenes Mobiltelefon nachgerüstet wird.

Um eine einmal gewählte Einstellung einer vorbestimmten Längsschiebeposition zu sichern, ist bei der erfindungsgemäßen Vorrichtung mit Vorteil vorgesehen, daß die Schenkelabschnitte mit gegenseitig in Wirkverbindung bringbaren Rastmitteln zur Festsetzung in vorbestimmten Längsschiebepositionen ausgerüstet sind.

Dazu kann die Ausgestaltung derart getroffen sein, daß als Rastmittel Vertiefungen und darin formschlüssig eingreifende Vorsprünge vorgesehen sind, die entlang des Schiebewegs in einer Reihe verteilt an einander zugekehrten Flächen der eine Schiebeführung bildenden Schenkelabschnitte angeordnet sind. Die Vertiefungen können z. B. einfache Durchbrechungen, beispielsweise in Form einer angebrachten Lochreihe sein. Die Vorsprünge können als buckelartige Erhebungen ausgebildet sein, die ebenfalls in einer Reihe angeordnet werden. Dabei ist die Anordnung auch derart ausgebildet, daß Vertiefungen und Vorsprünge zueinander in einem vorbestimmten Rastermaß angeordnet sind.

Es ist auch möglich, den das Stützmittel bildenden Schenkel als rechteckförmigen Rahmen auszubilden. Selbstverständlich kann auch die Grundplatte in Form eines Rahmens vorliegen. Die Ausgestaltung als Rahmen hat Vorteile hinsichtlich einer Verbesserung der mechanischen Festigkeit der Vorrichtung und ermöglicht die Einhaltung geringen Eigengewichts.

Der das Stützmittel bildende Rahmen kann z. B. aus U-förmigen Teilrahmen bestehen, wobei jeder Teilrahmen an den U - Schenkeln des jeweils anderen U - förmigen Teilrahmens längsverschiebbar geführt ist. Dies ermöglicht wieder die Anpassung der Spreizwinkel an unterschiedlich dimensionierte Mobiltelefone bzw. die Veränderung des Standwinkels eines Mobiltelefons, indem ein verschiebbarer Teilrahmen gegenüber einem an der Grundplatte angelenkten, feststehenden Teilrahmen längsverschoben wird.

Die gesamte Vorrichtung mit Grundplatte und Stützmittel kann aus Kunststoff im Spritzgußverfahren hergestellt sein. Es ist natürlich auch möglich, die Grundplatte aus Kunststoff herzustellen und das daran angelenkte Stützmittel als Metallteil auszubilden, beispielsweise in Form von Rahmenteilen aus dafür geeignetem Draht.

Die dem angesetzten Mobiltelefon abgekehrte Rückseite der Grundplatte ist mit Vorteil mit einer federelastischen Klemmlasche ausgerüstet. Diese kann auch bei an die Grundplatte angeklapptem Stützmittel die Funktion eines Gürtelclips erfüllen, mit dem ein Halten des Mobiltelefons an einem Gürtel möglich ist, den der Benutzer des Mobiltelefons um seinen Körper geschlungen hat.

Insbesondere bei der Ausbildung eines Stützmittels als U - förmiger Teilrahmen, kann die federelastische Klemmlasche bei an die Rückseite angelegtem Stützmittel problemlos zwischen den U - Schenkeln des angeklappten Teilrahmens vorstehen und in an sich bekannter Weise zum Halten bzw. Befestigen des Mobiltelefons genutzt werden. Dazu kann mit besonderem Vorteil ein mit glatten Oberflächen beliebiger Art, beispielsweise Oberflächen eines Armaturenbrettes eines Kraftfahrzeuges verbindbares Steckstück vorgesehen sein, welches eine Steckaufnahme für die federelastische Klemmlasche aufweist. Das Steckstück kann nach Art eines ösenartigen Beschlages ausgebildet sein, indem es mit einer Fußfläche ausgerüstet ist, die, beispielsweise durch eine Beschichtung mit doppelseitigem Klebeband, mit der glatten Oberfläche, z. B. eines Armaturenbrettes, verbunden werden kann. In die ösenartig ausgebildete Steckaufnahme kann die federelastische Klemmlasche eingeschoben werden, um das Mobiltelefon über das Steckstück an dem Armaturenbrett zu halten.

Das Steckstück kann ein kostengünstig herstellbares Kunststoffteil sein.

Ein Ausführungsbeispiel, aus dem sich weitere erfinderische Merkmale ergeben, ist in der Zeichnung dargestellt. Es zeigen:
- Fig. 1: eine Ansicht der aufgestellten Vorrichtung mit durch strichpunktierte Linien angedeutetem Umriß eines in stehender Position gehaltenen Mobiltelefons,
- Fig. 2: eine Ansicht der Vorrichtung in auseinander geklappter Funktionsstellung,
- Fig. 3: eine Ansicht der Vorrichtung in zusammengeklappter Stellung,
- Fig. 4: eine Ansicht in einem Schnitt entlang der Linie IV - IV in Fig. 2,
- Fig. 5: eine Ansicht der Vorrichtung in zusammengeklappter Stellung vor der Verbindung mit einem Steckstück, und
- Fig. 6: die Vorrichtung nach der Verbindung mit dem Steckstück.

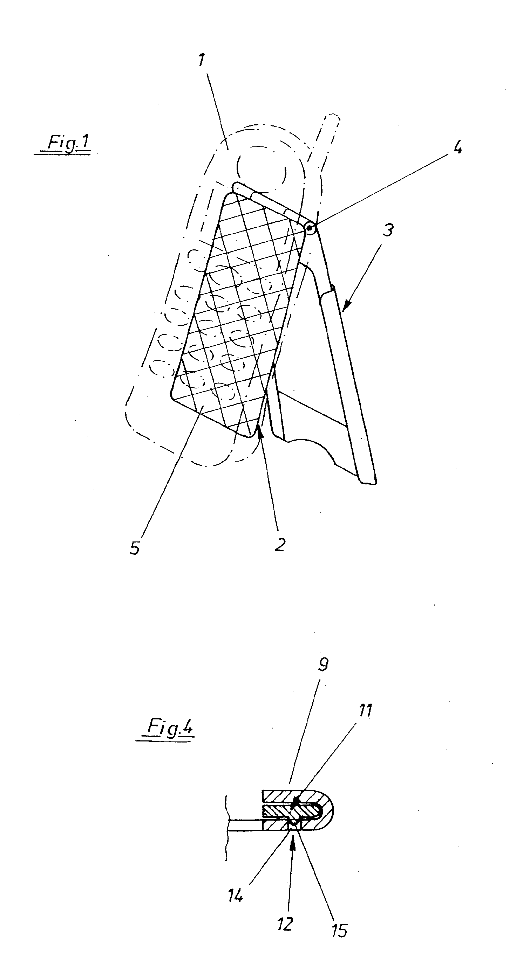

Fig. 1 ist eine Ansicht der Vorrichtung zum Halten eines hier in seinen Umrissen durch strichpunktierte Linien angedeuteten Mobiltelefons 1 in einer etwa aufrecht bzw. hochkant stehenden Position.

Die Vorrichtung besteht aus einer vorderen Grundplatte 2 und aus wenigstens einem mit der Grundplatte 2 klappbeweglich verbundenen und somit davon abspreizbaren Stützmittel 3. Stützmittel 3 und Grundplatte 2 sind als Schenkel eines Scharnieres ausgebildet, und sind mittels eines gemeinsamen Scharnierbolzens 4 klappgelenkig miteinander verbunden. Die Grundplatte 2 weist hier durch Kreuzschraffur angedeutete Haltemittel 5 auf, beispielsweise in Form eines an der Grundplatte angebrachten doppelseitigen Klebebandes. Die Haltemittel ermöglichen es, ein Mobiltelefon 1 mit seiner Display und Tastenfeld gegenüberliegenden Rückseite an die Grundplatte anzusetzen.

Durch Abklappen bzw. Abspreizen des Stützmittels 3 kann das Mobiltelefon 1 sodann in einer etwa aufrecht bzw. hochkant stehenden Position verbleiben.

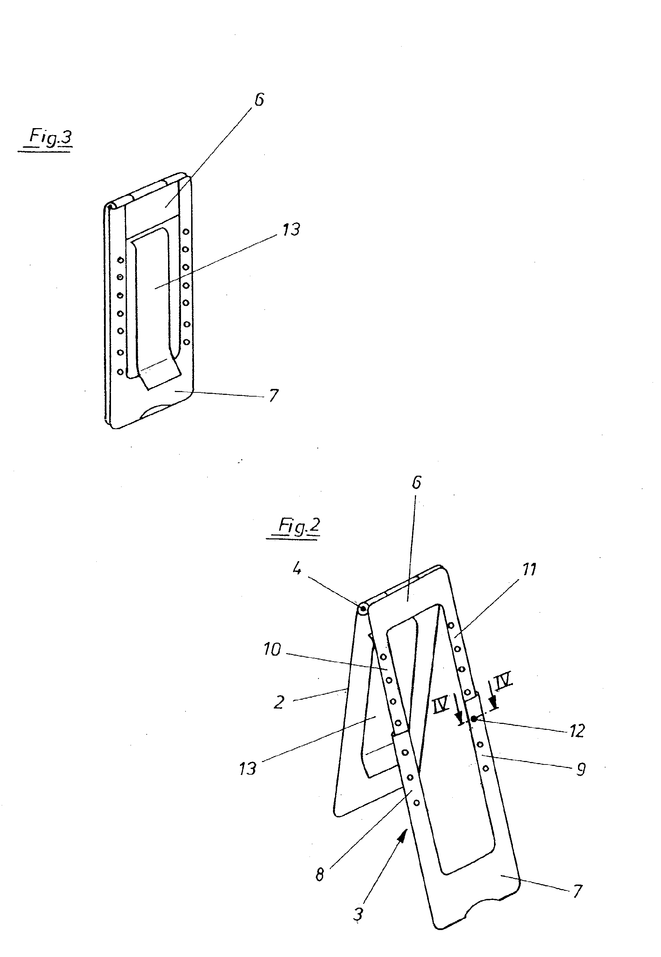

Fig. 2 zeigt eine Ansicht der Vorrichtung ohne Mobiltelefon 1 in aufgestellter bzw. aufgeklappter Position. Es ist hier die Rückseite der Grundplatte 2 zu sehen. Fig. 2 verdeutlicht insbesondere die Ausbildung von Stützmittel 3 und Grundplatte 2 als Schenkel eines Scharniers, wobei die Schenkel mittels des gemeinsamen Scharnierbolzens 4 miteinander gelenkig verbunden sind. Es sind an sich bekannte, hier nicht weiter dargestellte Klappwegbegrenzungsmittel vorgesehen, die den Klappwinkel bzw. Spreizwinkel zwischen Stützmittel 3 und Grundplatte 2 auf maximal 90° beschränken. Bevorzugt ist die Begrenzung auf einen Klapp- bzw. Spreizwinkel von etwa 45° bis 75°.

Fig. 2 verdeutlicht insbesondere, daß der das Stützmittel 3 bildende Schenkel des Scharniers als rechteckförmiger Rahmen ausgebildet ist, wobei jeder Rahmen aus U-förmigen Teilrahmen 6 und 7 besteht.

Der Teilrahmen 7 ist mit seinen U - Schenkeln 8 und 9 an den U - Schenkeln 10 und 11 des Teilrahmens 6 längsverschiebbar geführt.

Somit besteht der das eigentliche Stützmittel 3 darstellende Schenkel des Scharniers aus durch die Teilrahmen 6 und 7 gebildeten Schenkelabschnitten, die gegeneinander längsverschiebbar sind. Zur Festsetzung in vorbestimmten Längsschiebepositionen sind gegenseitig in Wirkverbindung bringbare Rastmittel 12 vorgesehen.

Fig. 2 verdeutlicht des weiteren, daß die Rückseite der Grundplatte 2 mit einer federelastischen Klemmlasche 13 ausgerüstet ist, die ähnlich einem an sich bekannten "Gürtelclip" wirkt.

Fig. 3 zeigt die Rückseite der Vorrichtung in zusammengeklappter Stellung. Gleiche Bauteile sind mit gleichen Bezugszahlen bezeichnet. Fig. 3 verdeutlicht, daß die Klemmlasche 13 durch den freien Raum zwischen den Schenkeln der Teilrahmen 6 und 7 vorstehen kann.

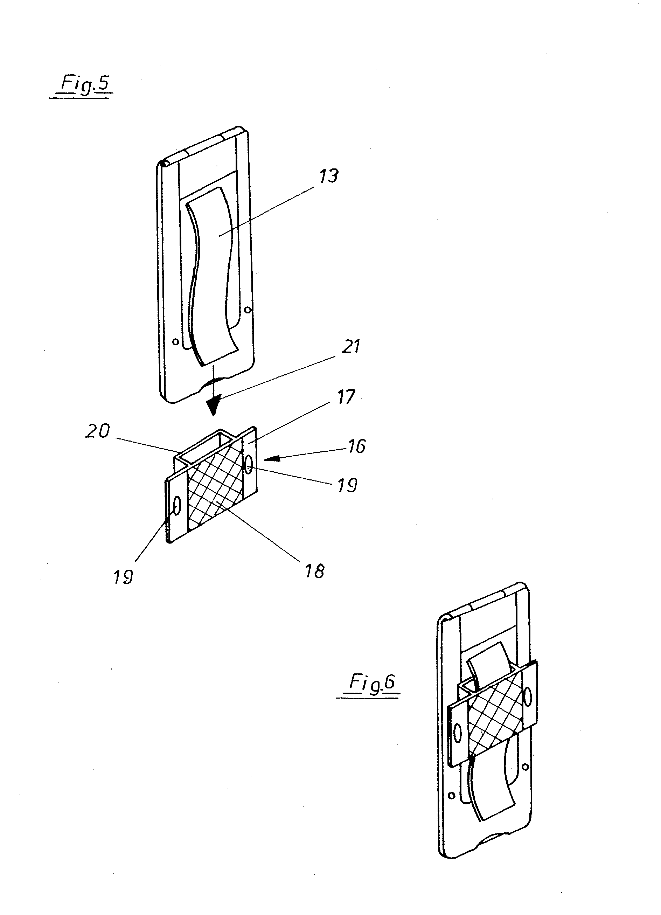

Fig. 4 zeigt einen Schnitt entlang der Linie IV - IV in Fig. 2.

Fig. 4 verdeutlicht, daß der U - Schenkel 9 ein Führungsprofil ausbildet, in welchem der stegartige U-Schenkel 11 aufgenommen und längsverschiebbar geführt ist. Mit 12 sind Rastmittel bezeichnet, die, wie hier ersichtlich, als Vertiefungen 14 in Form von Löchern ausgebildet sind, in die an einer Oberfläche des U-Schenkels 11 angeordnete Vorsprünge 15 in einer bestimmten Schiebeposition eingreifen können.

Wie die Fig. 2 und 3 verdeutlichen, sind Vorsprünge 15 und Vertiefungen 14 in einer Reihe angeordnet. Die Anordnung ist in einem vorbestimmten Rastermaß vorgesehen, so daß bei einer Verschiebung der Rahmenabschnitte 6 und 7, relativ zueinander in Richtung ihrer Schenkel, mehrere Vorsprünge gleichzeitig in eine vorbestimmte Anzahl von Vertiefungen eingreifen können. Es ist jedoch ebenfalls möglich, lediglich eine Vertiefung vorzusehen, der eine Reihe von jeweiligen Vorsprüngen zugeordnet ist. Ebenso kann ein Vorsprung angeordnet werden, dem eine Reihe von Vertiefungen zwecks Verrastung bei formschlüssigem Eingriff zugeordnet ist.

Fig. 5 zeigt die Rückansicht einer Vorrichtung entsprechend Fig. 3 vor der Verbindung der Vorrichtung mit einem Steckstück 16. Gleiche Bauteile sind mit gleichen Bezugszahlen bezeichnet. Das Klemmstück kann an eine beliebige glatte Oberfläche, z. B. eine Oberfläche eines Armaturenbrettes eines Kraftfahrzeuges geklebt werden. Dazu ist zumindest ein Teilbereich der Rückseitenfläche 17 des Klemmstücks 16 mit einem Doppelklebeband 18 versehen. Eine alternative und/oder zusätzliche Befestigungsmöglichkeit sieht Löcher 19 vor, durch die Nägel, Schrauben, Niete oder dergleichen Befestigungsmittel in einen Untergrund getrieben werden können, mit dem das Klemmstück 16 verbunden werden soll.

Auf der gegenüberliegenden, hier abgekehrten Vorderseite, weist das Klemmstück 16 eine etwa hülsenförmig ausgebildete Steckaufnahme 20 auf.

Das Steckstück kann aus Kunststoff oder Metall oder anderem geeigneten Werkstoff gefertigt sein. Ein mit der erfindungsgemäßen Vorrichtung ausgerüstetes Mobiltelefon kann dann in Richtung des Pfeils 21 so mit dem Klemmstück 16 verbunden werden, daß die Klemmlasche 13 in der Steckaufnahme 20 des Steckstückes 16 aufgenommen und gehalten ist, wie es z. B. in Fig. 6 dargestellt ist.

Ist das Steckstück dabei an einer glatten Oberfläche einer Struktur befestigt, ist das Mobiltelefon ebenfalls, allerdings lösbar, an der Struktur gehalten.

## Patentansprüche

1. vorrichtung zum Halten eines Gerätes für die Funkkommunikation, insbesondere eines Mobiltelefons, in einer etwa aufrecht, bzw. hochkant stehenden Position, **gekennzeichnet durch**,
eine Grundplatte (2) mit Haltemitteln (5) zum Ansetzen und Halten eines Mobiltelefons (1) mit seiner ein Display und Tastenfeld aufweisenden Bedienseite gegenüberliegenden Rückseite an der Grundplatte (2) und **durch** wenigstens ein mit der Grundplatte (2) klappbeweglich verbundenes und somit davon abspreizbares Stützmittel (3).

2. Vorrichtung nach Anspruch 1, **dadurch gekennzeichnet, daß** das Haltemittel (5) als Klebeschicht bzw. Haftlage ausgebildet ist.

3. Vorrichtung nach Anspruch 2, **dadurch gekennzeichnet, daß** die Klebeschicht bzw. Haftlage ein an der Grundplatte (2) angebrachtes doppelseitiges Klebeband ist.

4. Vorrichtung nach einem der Ansprüche 1 bis 3, **dadurch gekennzeichnet, daß** das Stützmittel (3) und die Grundplatte (2) jeweils als Schenkel eines Scharniers ausgebildet sind, die mittels eines gemeinsamen Scharnierbolzens (4) miteinander klappgelenkig verbunden sind.

5. Vorrichtung nach Anspruch 4, **dadurch gekennzeichnet, daß** Klappwegbegrenzungsmittel vorgesehen sind.

6. Vorrichtung nach einem der Ansprüche 4 und 5, **dadurch gekennzeichnet, daß** der das Stützmittel (3) bildende Schenkel aus gegeneinander längsverschiebbaren Schenkelabschnitten besteht.

7. Vorrichtung nach Anspruch 6, **dadurch gekennzeichnet, daß** die Schenkelabschnitte teleskopartig aneinander geführt sind.

8. Vorrichtung nach einem der Ansprüche 6 und 7, **dadurch gekennzeichnet, daß** die Schenkelabschnitte mit gegenseitig in Wirkverbindung bringbaren Rastmitteln (12) zur Festsetzung in vorbestimmten Längsschiebepositionen ausgerüstet sind.

9. Vorrichtung nach Anspruch 8, **dadurch gekennzeichnet, daß** als Rastmittel (12) Vertiefungen (14) und darin formschlüssig eingreifende Vorsprünge (15) vorgesehen sind, die entlang des Schiebewegs in einer Reihe verteilt an aneinander zugekehrten Flächen der eine Schiebeführung bildenden Schenkelabschnitte angeordnet sind.

10. Vorrichtung nach einem der vorhergehenden Ansprüche, **dadurch gekennzeichnet, daß** der das Stützmittel (3) bildende Schenkel als rechteckförmiger Rahmen ausgebildet ist.

11. Vorrichtung nach Anspruch 10, **dadurch gekennzeichnet, daß** der Rahmen aus U - förmigen Teilrahmen (6, 7) besteht, und daß jeder Teilrahmen (7) an den U - Schenkeln (10, 11) des jeweils anderen U - förmigen Teilrahmens (6) längsverschiebbar geführt ist.

12. Vorrichtung nach einem der vorhergehenden Ansprüche, **dadurch gekennzeichnet, daß** der Werkstoff für die Grundplatte (2) und / oder das Stützmittel (3) Kunststoff ist.

13. Vorrichtung nach einem der vorhergehenden Ansprüche, **dadurch gekennzeichnet, daß** die dem angesetzten Mobiltelefon abgekehrte Rückseite der Grundplatte (2) mit einer federelastischen Klemmlasche (13) ausgerüstet ist.

14. Vorrichtung nach einem der Ansprüche 1 bis 13, **dadurch gekennzeichnet, daß** ein mit glatten Oberflächen beliebiger Art, beispielsweise Oberflächen eines 5 Armaturenbrettes eines Kraftfahrzeuges, verbindbares Steckstück (16) vorgesehen ist, welches eine Steckaufnahme (20) für die federelastische Klemmlasche (13) aufweist.
